# EUROPEAN PATENT APPLICATION

(11) **EP 4 404 088 A1**
(43) Date of publication of application: **24.07.2024**
(21) Application number: 23305064.0
(22) Date of filing: 18.01.2023
(51) Int. Cl.: G06F 21/53, G06F 21/57

(54) **EMBEDDED CHARACTERIZATION AND MEASUREMENT ENGINE FOR A VIRTUAL FUNCTION**

(71) Applicant: THALES DIS FRANCE SAS, 92190 Meudon (FR)
(72) Inventor: PRADEN, Anne-Marie, 13122 VENTABREN (FR)
(74) Representative: Quintero Romero, Manuel

(57) **Abstract**

The invention relates to an embedded characterization and measurement engine (CME1) for a virtual function (VF) within an infrastructure (I), wherein said embedded characterization and measurement engine (CME1) is configured to:
- when the virtual function (VF) is instantiated within said infrastructure (I) and is running within said infrastructure (I), compute a fingerprint (F1) based on static characteristics (C1), said static characteristics (C1) being extracted from the whole or parts (P1) of the virtual function (VF),
- perform a local attestation (A1) by comparing said fingerprint (F1) with an initial fingerprint (F0) or transmit said fingerprint (F1) to a distant verifier (V) for a remote attestation (A2),
- if the fingerprint (F1) is different from said initial fingerprint (FO), sending a notification (N1, N2) to an external entity (E) for future action (Ac).

## Description

### FIELD OF THE INVENTION

The present invention relates to an embedded characterization and measurement engine for a virtual function. It also relates to a computer-implemented launching method for launching a virtual function. Such embedded characterization and measurement engine may be used in a non-limitative example for any secure integrity check of a virtual function.

### BACKGROUND OF THE INVENTION

Nowadays the virtualization technology that uses virtual functions is largely used for cloud services and telecom network services, to meet the requirements for scalability, flexibility, reliability and rapid service creation. However, this new technology introduces also new security challenges. One malicious virtual function may attack virtual functions residing on a same physical host. A way to control this threat well-known by the man skilled in the art is to implement an integrity check of all the virtual functions running on the physical host. This integrity check is done at the boot-time of a virtual function, the boot-time being performed during the instantiation of a virtual function and before it runs in its execution environment. The virtual function is not yet in operation. This integrity check is called the secured boot, and may be verified remotely using a remote attestation process where the integrity values of all single part of a virtual function are combined in a report and sent to a remote verifier that verifies the integrity values of the virtual function according to pre-stored values on a distant server that are called golden measurements.

One problem of this prior art is that this verification of integrity value against a golden measurement during boot-time is no more possible during the set-up time and during the run-time when the virtual function is executed after the instantiation, as during these phases some configurations, addresses and data may change. Thus, the integrity values computed during set-up time or run-time will be different from the golden measurements. Thus, it doesn't detect modifications of the virtual function and tampering by a malware during the set-up time and during the run-time.

It is an object of the invention to provide an embedded characterization and measurement engine for a virtual function, which resolves the problem above-stated.

### SUMMARY OF THE INVENTION

To this end, it is provided an embedded characterization and measurement engine for a virtual function within an infrastructure, wherein said embedded characterization and measurement engine is configured to:
- when the virtual function is instantiated within said infrastructure and is running within said infrastructure, compute a fingerprint based on static characteristics, said static characteristics being extracted from the whole or parts of the virtual function,
- perform a local attestation by comparing said fingerprint with an initial fingerprint or transmit said fingerprint to a distant verifier for a remote attestation,
- if the fingerprint is different from said initial fingerprint, sending a notification to an external entity for future action.

As we will see in further details, as the fingerprint is based on static characteristics, said static characteristics don't change during the instantiation of the virtual function or during the set-up time or run-time. Therefore, the fingerprint can be used to check the integrity of different sensitive parts of the virtual function when it is executed based on a comparison with an initial pre-stored fingerprint based on the same static characteristics.

According to non-limitative embodiments of the invention, the embedded characterization and measurement engine for a virtual function further comprises the following characteristics.

In a non-limitative embodiment, said parts of the virtual function are loops of the virtual function that are often executed and/or parts that are impacting the security of the virtual function if tampered.

In a non-limitative embodiment, said static characteristics comprise static data, and/or static source addresses, and/or static jump addresses, and/or recurrent calling graphs.

In a non-limitative embodiment, the computation of the fingerprint comprises:
- the computation of a characterization pattern that is a mapping of a value of each of these static characteristics with corresponding data area or code area for static data, and/or static source addresses, and/or static jump addresses, or a digital representation of the graph for the recurrent calling graphs,
- the computation of a hash of said characterization pattern.

There is also provided a computer-implemented downloading method for downloading a virtual function within an infrastructure, wherein said computer-implemented downloading method comprising:
- downloading a computer program product relative to said virtual function with an initial fingerprint of said virtual function, and with an embedded characterization and measurement engine according to any of the preceding characteristics, or a reference to an embedded characterization and measurement engine according to any of the preceding characteristics.

According to non-limitative embodiments of the invention, the computer-implemented downloading method for downloading a virtual function within an infrastructure further comprises the following characteristics.

In a non-limitative embodiment, said computer-implemented downloading method further comprising :
- configuring said embedded characterization and measurement engine by setting-up parameters related to said virtual function, said parameters comprising an indication on whether the static characteristics are to be extracted from the whole or parts of the virtual function, and which parts are concerned.

In a non-limitative embodiment, said parameters further comprise an indication of a maximum duration time for a set-up phase when launching said virtual function.

There is also provided a characterization and measurement engine for a virtual function, wherein said characterization and measurement engine is configured to:
- detect static characteristics within said virtual function when said virtual function is running,
- compute an initial fingerprint based on said static characteristics, said static characteristics being extracted from the whole or parts of the virtual function,
- store said initial fingerprint.

Said characterization and measurement engine is also called test characterization and measurement engine. The characterization and measurement engine monitors data, address and calls generated by the virtual function VF when running in all possible running cases during an initial phase.

According to non-limitative embodiments of the invention, the characterization and measurement engine for a virtual function further comprises the following characteristics.

In a non-limitative embodiment, said parts are loops of the virtual function that are often executed and/or parts that are impacting the security of the virtual function if tampered.

In a non-limitative embodiment, said static characteristics comprise static data, and/or static source addresses, and/or static and jump addresses, and/or recurrent calling graphs.

In a non-limitative embodiment, the computation of the initial fingerprint comprises:
- the computation of an initial characterization pattern that is a mapping of a value of each of these static characteristics with corresponding data area or code area for static data, and/or static source addresses, and/or static jump addresses, or a digital representation of the graph for the recurrent calling graphs,
- the computation of a hash of said initial characterization pattern.

There is also provided a computer-implemented launching method for launching a virtual function within an infrastructure, the launching comprising a set-up phase and a running phase executed after said set-up phase, said computer-implemented launching method comprising:
- launching said virtual function within said infrastructure by first executing said set-up phase,
- computing along the execution of said set-up phase by an embedded characterization and measurement engine corresponding to said virtual function a fingerprint of said virtual function,
- comparing during the set-up phase said fingerprint with an initial fingerprint,
- if the fingerprint is different from said initial fingerprint at the end of the set-up phase, sending a first notification to an external entity for future action,
- otherwise:
- executing the running phase,
- computing along the execution of said running phase by said embedded characterization and measurement engine of a fingerprint of said virtual function,
- comparing during said running phase said fingerprint with said initial fingerprint,
- if the fingerprint is different from said initial fingerprint during the running phase, sending a second notification to said external entity for future action,
- otherwise, resuming the execution of the launching.

According to non-limitative embodiments of the invention, the computer-implemented launching method for launching a virtual function within an infrastructure further comprises the following characteristics.

In a non-limitative embodiment, the comparison of said fingerprint is a local attestation performed by said embedded characterization and measurement engine.

In a non-limitative embodiment, the comparison of said fingerprint is a remote attestation performed by a distant verifier.

In a non-limitative embodiment, the end of the set-up phase is determined when during the execution of the set-up phase either by said fingerprint's value reaching said initial fingerprint's value, either by the duration of the set-up phase reaching a maximum duration time.

In a non-limitative embodiment, said fingerprint is based on static characteristics, said static characteristics being extracted from the whole or parts of the virtual function.

In a non-limitative embodiment, the initial characterization pattern is in the form of a matrix representing the data area and code area with specific values for each of these static characteristics.

In a non-limitative embodiment, the computer-implemented launching method further comprises transmitting said fingerprint to said distant verifier.

In a non-limitative embodiment, the characterization pattern is in the form of a matrix representing the data area and code area with specific values for each of these static characteristics.

In a non-limitative embodiment, the test characterization and measurement engine is a software or hardware or a combination of both.

In a non-limitative embodiment, the embedded characterization and measurement engine is a software or hardware or a combination of both.

In a non-limitative embodiment, the computer-implemented launching method further comprises transmitting said fingerprint to said distant verifier.

There is also provided a computer-program product for a computer, comprising a set of instructions, which when loaded into said computer, causes the computer to carry out the computer-implemented launching method as characterized in any of the preceding characteristics.

There is also provided a non-transitory machine-readable medium having instructions stored therein, which when executed by a processor, cause the processor to perform the computer-implemented launching method as characterized in any of the preceding characteristics.

There is also provided a computer-program product for a computer, comprising a set of instructions, which when loaded into said computer, causes the computer to carry out the computer-implemented downloading method as characterized in any of the preceding characteristics.

There is also provided a non-transitory machine-readable medium having instructions stored therein, which when executed by a processor, cause the processor to perform the computer-implemented downloading method as characterized in any of the preceding.

### BRIEF DESCRIPTION OF THE DRAWINGS

Some embodiments of methods and/or system in accordance with embodiments of the present invention are now described, by way of example only, and with reference to the accompanying drawings, in which:
- Figure 1 is a schematic diagram which illustrates an embedded characterization and measurement engine for a virtual function with static characteristics of a virtual function as inputs and with a characteristic pattern in the form of a mapping matrix as output, according to a non-limitative embodiment of the invention,
- Figure 2 is a schematic diagram which illustrates an infrastructure that hosts a virtual function to which said embedded characterization and measurement engine of figure 1 is related, according to a non-limitative embodiment,
- Figure 3 is a schematic organization chart of a computer-implemented downloading method for downloading a virtual function with said embedded characterization and measurement engine or with a reference to said characterization and measurement engine of said figure 1, according to a non-limitative embodiment,
- Figure 4 is a schematic diagram of a characterization and measurement engine for a virtual function that is configured to compute an initial fingerprint of a virtual function, according to a non-limitative embodiment of the invention,
- Figure 5 is a schematic organization chart of a computer-implemented launching method for a virtual function within an infrastructure, the launching comprising a set-up phase and a running phase executed after said set-up phase, according to a non-limitative embodiment of the invention,
- Figure 6 is the continuation of the organization chart of figure 5, according to a non-limitative embodiment,
- Figure 7 is a schematic diagram which illustrates a test phase during which the characterization and measurement engine of figure 4 is called or run, and a set-up phase and running phase during which the embedded characterization and measurement engine of figure 1 is called or run, according to a non-limitative embodiment.

### DESCRIPTION OF EMBODIMENTS OF THE INVENTION

In the following description, well-known functions or constructions by the man skilled in the art are not described in detail since they would obscure the invention in unnecessary detail.

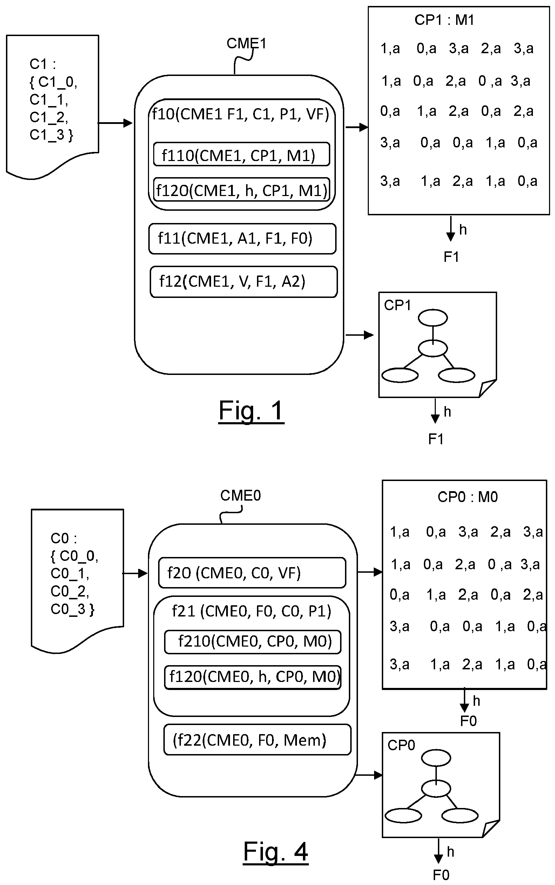

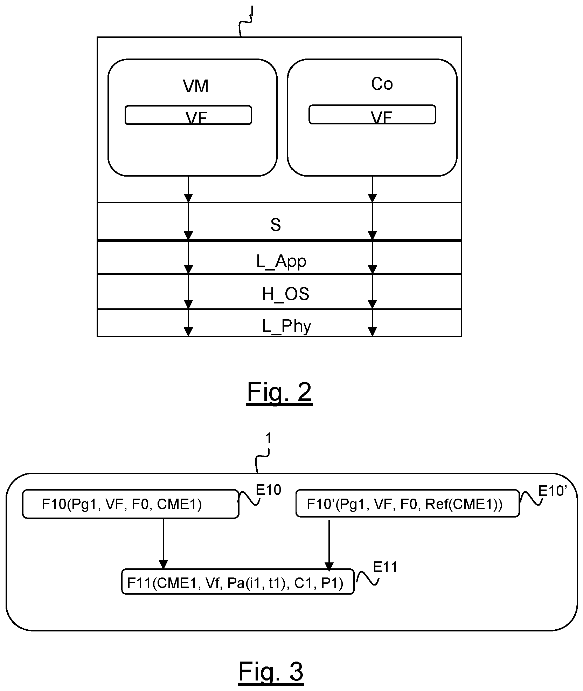

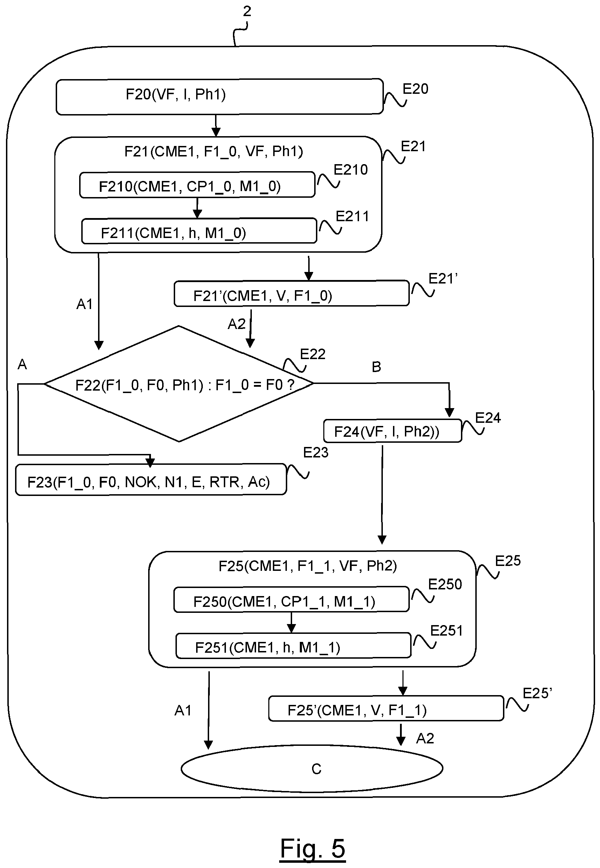

The present invention relates to an embedded characterization and measurement engine CME1 for a virtual function VF within an infrastructure I, said embedded characterization and measurement engine CME1 being described in reference to figure 1. The present invention also relates to a computer-implemented downloading method 1 for downloading a virtual function VF within an infrastructure I, said computer-implemented downloading method 1 being described in reference to figures 3. The present invention also relates to a characterization and measurement engine CME0 for a virtual function VF, said characterization and measurement engine CME0 being described in reference to figure 4. The present invention also relates to a computer-implemented launching method 2 for launching a virtual function VF within an infrastructure I, said a computer-implemented launching method 2 being described in reference to figure 5.

The embedded characterization and measurement engine CME1 is related to a virtual function VF that is within an infrastructure I as illustrated in figure 2. In non-limitative embodiments, the embedded characterization and measurement engine CME1 relates to one or a plurality of virtual functions VF. In the following, it relates to one virtual function VF in a non-limitative example. In non-limitative embodiments, an infrastructure I is a single computer, a server or a cloud infrastructure.

In a non-limitative embodiment, the infrastructure I comprises physical resources HDW also called hardware distributed on a physical layer L_Phy, a host operating system H_OS, and applications App distributed on an application layer L_App, and services S above the application layer L_App. Virtualization technique permits to create Virtual machines VM and/or containers Co, which implement virtual functions VF within an infrastructure I. Virtual machines VM and containers Co being well-known by the man skilled in the art, they are not described here. These virtual functions can be implemented on any layer of the infrastructure I and also implement the services S.

A virtual function VF comprises one or a plurality of functions. To run a virtual function VF, it has to be instantiated. When a virtual function VF is instantiated, some parameters are configured, some functions are enabled according of some settings of the parameters, some links are enabled with other virtual functions VF etc. A virtual function VF comprises static characteristics and non-static characteristics, i.e., dynamic characteristics. The static characteristics don't change during the instantiation and during the running of the virtual function VF contrary to the non-static characteristics.

As illustrated in figure 1, the embedded characterization and measurement engine CME1 is configure to:
- when the virtual function VF is instantiated within an infrastructure I and is running within said infrastructure I, compute a fingerprint F1 based on static characteristics C1, said static characteristics C1 being extracted from the whole or parts P1 of the virtual function VF (function illustrated f10(CME1 F1, C1, P1, VF)). Hence, either one considers all the static characteristics C1 of the virtual function VF, either, one considers only some of the static characteristics C1 of the virtual function VF.

In a non-limitative embodiment, said parts P1 of the virtual function VF are loops of the virtual function VF that are often executed and/or parts that are impacting the security of the virtual function VF if tampered. Hence, the latter parts concern in particular sensitive data or sensitive code.

In a non-limitative embodiment illustrated in figure 1, said static characteristics C1 comprise:
- static data C1_0, and/or
- static source addresses C1_1, and/or
- static jump addresses C1_2, . and/or
- recurrent calling graphs C1_3.

They are the same as the static characteristics C0 mentioned for the characterization and measurement engine CME0 later in the description.

Hence, the embedded characterization and measurement engine CME1 permits to compute a fingerprint F1 which characterized the virtual function VF, and permits to measure this characterization by designing the mapping of each of the static characteristics as follows.

For the static data, static source addresses, static jump addresses, the fingerprint F1 is based on a characterization pattern CP1 that is a mapping of a value of each of these static characteristics C1 with corresponding data area or code area as illustrated in figure 1. The data area or code area are respectively data addresses or code addresses. For the recurrent calling graphs, the fingerprint F1 is based on a characterization pattern CP1 that is a digital representation of the graph of the recurrent calling graph as illustrated in figure 1. In a non-limitative example, the digital representation is a file with a graph description language (.dot for example).

In a non-limitative embodiment, for the static data, static source addresses, static jump addresses, the mapping is in the form of a matrix M1 representing the data area of the static data, and code area of the static sources and jump addresses, with specific values for each of these static characteristics, and their addresses. Hence, for a static data, there is a corresponding specific value and an address which is a memory address. Hence, for a static source, a jump address, there is a corresponding specific value and a code address.

In non-limitative examples, the specific values are:
- the value 1 is for data remaining static,
- the value 2 is for static source addresses,
- the value 3 is for static jump addresses.

Hence, the matrix M1 comprises locations with these values as illustrated in figure 1, and their corresponding addresses referred to as "a" in figure 1. In a non-limitative embodiment, the other locations of the matrix M1 are represented with the value 0, and corresponding addresses.

In a non-limitative embodiment, a fingerprint F1 of said matrix M1 can be generated using a cryptographic algorithm. In a non-limitative embodiment, the fingerprint F1 is a hash referred to as h in figure 1 of said matrix M1 as illustrated in figure 1. Regarding the recurrent calling graphs, in a non-limitative embodiment, the fingerprint F1 is a hash of the digital representation as illustrated in figure 1. This fingerprint F1 is compared to a golden measurement, which is an initial fingerprint F0 described later on. It is to be noted that any change in the characterization pattern CP1 will generate a different fingerprint F1.

Hence, the computation of the fingerprint F1 comprises :
- the computation of a characterization pattern CP1 (function f110(CME1, CP1, M1) illustrated) that is a mapping of a value of each of these static characteristics C1 with corresponding data area or code area (both referred as "a" in figure 1),
- the computation of a hash h of said characterization pattern CP1 (function f120(CME1, h, CP1, M1) illustrated). The value of the hash h is the fingerprint F1.

When the fingerprint F1 is computed, the embedded characterization and measurement engine CME1 is configured to perform a local attestation A1 by comparing said fingerprint F1 with an initial fingerprint F0 (function illustrated f11 (CME1, A1, F1, F0) or transmit said fingerprint F1 to a distant verifier V for a remote attestation A2 (function illustrated f12(CME1, V, F1, A2)).

In a non-limitative embodiment, the embedded characterization and measurement engine CME1 is a root of trust of measurement referred to as RTM. It runs in parallel with the CPU used for the execution of the virtual function VF. Hence, as the embedded characterization and measurement engine CME1 is sensitive, in a non-limitative embodiment, it is located in a trusted execution environment TEE of a processor that belongs to the infrastructure I.

As the static characteristic won't change when the virtual function VF is instantiated and when it runs within said infrastructure I, the value of the fingerprint F1 won't change. Therefore, if it changes, it will be different from the initial fingerprint F0, and it means that a malware has tampered with the virtual function VF. The computing of the initial fingerprint F0 is explained later in the description.

In non-limitative embodiments, the embedded characterization and measurement engine CME1 is a software or hardware or a combination of both. Said hardware or software can be implemented in several manners.

The hardware may be a single dedicated processor, a single shared processor, or a plurality of individual processors, some of which may be shared. Explicit use of the term "processor" should not be construed to refer exclusively to hardware capable of executing software, and may implicitly include, without limitation, digital signal processor (DSP) hardware, application specific integrated circuit (ASIC), field programmable gate array (FPGA), read only memory (ROM) for storing software, and non-volatile storage. Other hardware, conventional and/or custom, may also be included.

The software may be implemented by means of a computer program product that is suitable programmed respectively. The computer program product comprises a set of instructions which when loaded into said computer, causes the computer to carry out the functions described for the embedded characterization and measurement engine CME1. The set of instructions may be loaded into the programming memory by reading a data carrier such as, for example, a disk. The programming memory is a non-transitory computer readable storage medium comprising instructions which when executed by a computer, causes the computer to carry out the functions described for the embedded characterization and measurement engine CME1. A service provider can also make the set of instructions available via a communication network such as, for example, the Internet.

Figure 3 illustrates a computer-implemented downloading method 1 for downloading a virtual function VF within an infrastructure I. When the VF is instantiated, it is downloaded in the infrastructure I.

As an embedded characterization and measurement engine CME1 corresponds to at least a particular virtual function VF, when a developer wants to use a computer program product Pg1 relative to said virtual function VF, he has also to relate said computer program product Pg1 to the corresponding embedded characterization and measurement engine CME1. To this end, the computer-implemented downloading method 1 comprises:
- downloading a computer program product Pg1 relative to said virtual function VF with an initial fingerprint F0 of said virtual function VF, and with:
- the corresponding embedded characterization and measurement engine CME1 (step E10 illustrated F10(Pg1, VF, F0, CME1), or
- a reference Ref to the corresponding embedded characterization and measurement engine CME1 step E10' illustrated F10'(Pg1, VF, F0, Ref(CME1)). In this case, it means that the embedded characterization and measurement engine CME1 is not embedded within the infrastructure I, but is embedded within a distant server.

In a non-limitative embodiment, said computer-implemented downloading method 1 further comprises a step E11 illustrated F11(CME1, VF, Pa(i1, t1), C1, P1) of configuring said embedded characterization and measurement engine CME1 by setting-up parameters Pa related to said virtual function VF, said parameters Pa comprising an indication i1 on whether the static characteristics C1 are to be extracted from the whole or parts P1 of the virtual function VF, and which parts P1 are concerned. Hence, when the embedded characterization and measurement engine CME1 will be executed, it will know exactly if it has to compute the fingerprint F1 of the virtual function VF on the whole or only on parts P1 of the virtual function VF, and for the latter, exactly on which parts P1. In a non-limitative embodiment, said parameters Pa further comprise an indication of a maximum duration time t1 for a set-up phase Ph1 (described in the following) when launching said virtual function VF. If this duration time t1 is over, as we will see in the following, it means that there is an anomaly.

It is to be noted that when a reference Ref is used, if the embedded characterization and measurement engine CME1 is a software, there will be a call to this software when the VF is launched. When it is a hardware, there will be a run of this hardware when the VF is launched.

As above-mentioned, the fingerprint F1 is compared with an initial fingerprint F0. The initial fingerprint F0 is computed by a characterization and measurement engine CME0 for a virtual function VF illustrated in figure 4, also called test characterization and measurement engine CME0. Said characterization and measurement engine CME0 will provide an initial fingerprint F0 based on an initial characterization pattern CP0 of the virtual function VF that is used as a golden measurement of the virtual function VF. This golden measurement will be further checked with the fingerprint F1 based on a running characterization pattern CP1 generated during the running of the instantiated virtual function VF using an attestation process.

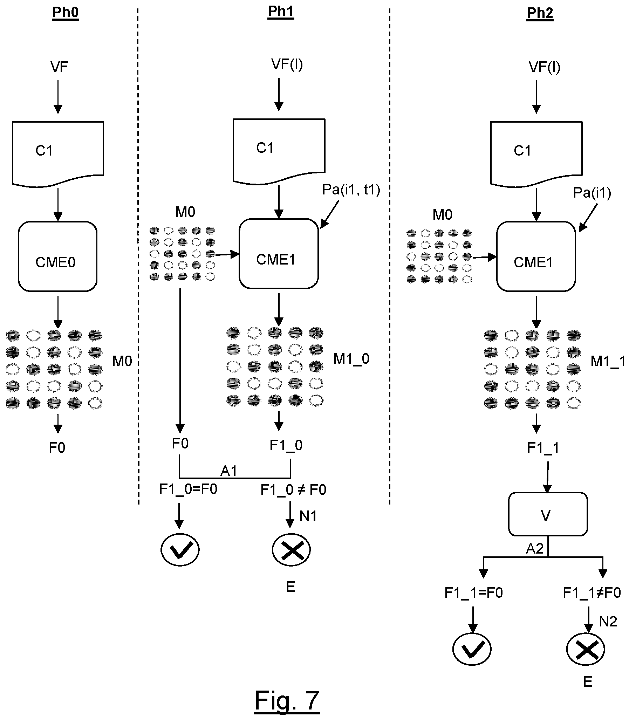

The characterization and measurement engine CME0 monitors data, address and calls generated by the virtual function VF when running in all possible running cases during an initial phase Ph0, also called test phase Ph0, illustrated in figure 7 of the virtual function VF, that is to say before downloading the virtual function VF on the infrastructure I and thus before the instantiation of the virtual function VF within the final infrastructure I. In all possible running cases means that it goes in all the branches of the virtual function VF. During this test phase Ph0, there is still an instantiation of the virtual function VF, for example on a computer of the developer who executes the test phase Ph0. To simplify the figure 7, the matrix M0 (described later) has been illustrated with white points for the 0 values and with gray points for the other values of its different locations.

In particular, said test characterization and measurement engine CME0 is configured to:
- detect static characteristics C0 within said virtual function VF when said virtual function VF is running (function f20(CME0, C0, VF) illustrated),
- compute an initial fingerprint F0 based on said static characteristics C0, said static characteristics C0 being extracted from the whole or parts P1 of the virtual function VF (function f21 (CME0, F0, C0, P1) illustrated),
- store said initial fingerprint F0 (function f22(CME0, F0, Mem) illustrated).

In a non-limitative embodiment, the test characterization and measurement engine CME0 is a software or hardware or a combination of both. The definitions of the hardware and software above mentioned for the embedded characterization and measurement engine CME1 can be applied for the test characterization and measurement engine CME0.

Hence, either one considers all the static characteristics C0 of the virtual function VF, either, one considers only some of the static characteristics C0 of the virtual function VF. The detection of the characteristics C0 is performed in all the branches of the virtual function VF.

In a non-limitative embodiment illustrated in figure 1, said static characteristics C0 comprise:
- static data C0_0, and/or
- static source addresses C0_1, and/or
- static jump addresses C0_2, and/or
- recurrent calling graphs C0_3.

In a non-limitative embodiment, said parts P1 are loops of the virtual function VF that are often executed and/or parts that are impacting the security of the virtual function VF if tampered. These latter parts concern in particular sensitive data or sensitive code.

In a non-limitative example, a static source address permits access to sensitive data such as a private key for authentication of a virtual function VF used as a network core function. A change from an attacker of this private key will generate errors during authentication that will finally lock down the network. In another non-limitative example, a static jump address permits access to a code part where there is a verification of the private key. In another non-limitative example, static data are configuration security flags that set-up the level of security of the virtual function VF or enable specific protection that an attacker could disable changing its value.

It is to be noted that the developer knows which parts are impacting the security of the virtual function VF if tampered.

For each virtual function VF that will be used within an infrastructure I, the developer will use the characterization and measurement engine CME0 to compute the corresponding initial fingerprint F0. So, there is only one characterization and measurement engine CME0 for a plurality of virtual functions VF.

For the static data, static source addresses, static jump addresses, the initial fingerprint F0 is based on an initial characterization pattern CP0 that is a mapping of a value of each of these static characteristics C0 with corresponding data area or code area as illustrated in figure 2. The data area or code area are respectively data addresses or code addresses. For the recurrent calling graphs, the initial fingerprint F0 is based on an initial characterization pattern CP0 that is a digital representation of the graph of the recurrent calling graph as illustrated in figure 2. In a non-limitative example, the digital representation is a file with a graph description language (.dot for example).

In a non-limitative embodiment, for the static data, static source addresses, static jump addresses, the mapping is in the form of a matrix M0 representing the data area and code area of the static sources and jump addresses, with specific values for each of these static characteristics and their addresses. Hence, for a static source, a jump address, there is a corresponding specific value and a code address.

In non-limitative examples:
- the value 1 is for data remaining static,
- the value 2 is for static source addresses,
- the value 3 is for static jump addresses.

Hence, the matrix M0 comprises locations with these values as illustrated in figure 4, and their corresponding addresses referred to as "a" in figure 4.

In a non-limitative embodiment, the other locations of the matrix M0 are represented with the value 0, and corresponding addresses.

Hence, at the end of the test phase Ph0, the resulting matrix M0 is limited to the chosen parts P1 of the virtual function VF, in particular to the static characteristics.

A fingerprint of said matrix M0 can be generated using a cryptographic algorithm. In a non-limitative embodiment, the initial fingerprint F0 is a hash h (illustrated in figure 4) of said matrix M0. Regarding the recurrent calling graphs, in a non-limitative embodiment, the initial fingerprint F0 is a hash of the digital representation. This initial fingerprint F0 is used as a golden measurement. It is to be noted that any change in the initial characterization pattern CP0 will generate a different initial fingerprint F0.

Hence, the computation of the initial fingerprint F0 comprises:
- the computation of an initial characterization pattern CP0 (function f210(CME0, CP0, M0) illustrated) that is a mapping of a value of each of these static characteristics C1 with corresponding data area or code area (both referred as "a" in figure 4),
- the computation of a hash h of said initial characterization pattern CP0 (function f220(CME0, h, CP0, M0) illustrated). The value of the hash h is the initial fingerprint F0 also called golden measurement.

In the following, one describes the use of the golden measurement F0 to check the integrity of a virtual function VF when it is instantiated and runs within an infrastructure I.

When a virtual function VF has been instantiated, that is to say it has been downloaded onto an infrastructure I, it can be launched, that is to say it can be executed.

Figure 5 illustrates a computer-implemented launching method 2 for launching a virtual function VF within an infrastructure I. The launching comprises a set-up phase Ph1 and a running phase Ph2. The set-up phase Ph1 is different from the boot-time (as during the boot time, the virtual function VF is not already launched and is not running), and the running phase Ph2 is also called run-time.

When it runs, during the set-up phase Ph1 and the running phase Ph2, not all the branches of the virtual function VF are executed contrary to the test phase Ph0. Only some branches are, according to the parameters Pa set-up, said branches being limited to the selected static characteristics C1 mentioned before.

As will be described, there is a computation of a fingerprint F1 along the execution of the set-up phase Ph1 and a comparison of said fingerprint F1 with a golden measurement that is the initial fingerprint F0 found during the test phase Ph0. If the set-up phase Ph1 ends correctly, there is afterwards a computation of a fingerprint F1 along the execution of the running phase Ph2 and a comparison with a golden measurement that is the initial fingerprint F0 found during the test phase Ph0.

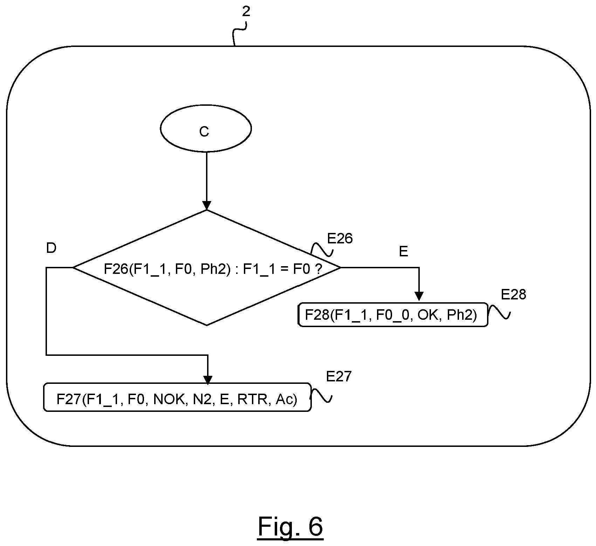

After a virtual function VF is instantiated and thus downloaded within the infrastructure I, the computer-implemented launching method 2 is run. Hence, as illustrated in figure 5 and figure 6, said computer-implemented launching method 2 comprises the following steps.

In step E20 illustrated F20(VF, I, Ph1) in figure 5, the virtual function VF is launched within the infrastructure I beginning by the execution of the set-up phase Ph1.

In step E21 illustrated (CME1, F1_0, VF, Ph1) in figure 5, the embedded characterization and measurement engine CME1 that corresponds to the virtual function VF computes along the execution of said set-up phase Ph1 a fingerprint F1_0 of said virtual function VF.

As described before, the computation of the fingerprint F1_0 comprises the sub-steps of:
- computing the corresponding characterization pattern CP1_0 in the form of the matrix M1_0 (sub-step E210 illustrated F210(CME1, CP1_0, M1_0)),
- computing a hash h of said matrix M1_0 (sub-step E210 illustrated F210(CME1, h, M1_0)).

It is to be noted that the matrix M1_0 corresponding to the characterization pattern CP1_0 is initially filled in with values of 0. Hence, the matrix M1 is reconstructed along the execution of the set-up phase Ph1.

It is to be noted that the same cryptographic function, here the hash, that was used to generate the initial fingerprint F0 is used.

The characterization pattern CP1_0 is called here a characterization set-up pattern CP1_0 as it is computed during the set-up phase Ph1. This characterization set-up pattern CP1_0 is generated taking into account the virtual function VF in its environment of the infrastructure I : the configuration of the data, the physical resources allocated after instantiation, the link to other virtual functions VF etc. The absolute value of addresses should differ but source addresses and jump addresses that were static remain static. The value of data remaining static during the set-up phase Ph1 may have changed due to configuration but they remain static, their location may differ due to placement of the virtual function VF resources.

Either the embedded characterization and measurement engine CME1 is within said infrastructure I, either the infrastructure I contains a reference Ref to said embedded characterization and measurement engine CME1, this latter being within a distant server in a non-limitative example. In this later case, there will be a call to said embedded characterization and measurement engine CME1 if it is a software or a run of said embedded characterization and measurement engine CME1 if it is a hardware.

As mentioned before, the fingerprint F1_0 is based on static characteristics C1, said static characteristics C1 being extracted from the whole or from some parts P1 of the virtual function VF.

From the whole of the virtual function VF means that the CME1 will go all over the branches of the virtual function VF to compute the fingerprint F1_0. From some parts P1 means that the CME1 will only go over some branches of the virtual function VF. The advantage of going over only to some parts P1 of the virtual function VF is to reduce the duration of the set-up phase Ph1.

Some of said parts P1 of the virtual function VF are loops of the virtual function VF that are often executed. It avoids taking into account some parts that are very specific and therefore not often executed. Hence, it reduces the duration of the set-up phase Ph1.

In conclusion, one has to find a balance between an acceptable duration of the set-up phase Ph1 and the size of the matrix M1_0 that corresponds to the integrity check significance during this set-up phase Ph1. The more the size of the matrix M1_0 is reduced, the less one can check the attacks on some parts of the virtual function VF. But, the more the size of the matrix M1_0 is, the more the duration of the set-up phase Ph1 increases.

In step E22 illustrated F22(F1_0, F0, Ph1) in figure 5, during the set-up phase Ph1, the fingerprint F1_0 is compared with the initial fingerprint F0.

It is to be noted that at the beginning, the fingerprint F1_0 is false as its related matrix M1_0 is filled with only 0 values (in a non-limitative example). So, the comparison is false. All the branches that have been selected during the test phase Ph0 are explored (those with the sensitive data/code or often executed). The matrix M1_0 is constructed during this exploration process. The comparison is performed as the construction of the matrix M1_0 progresses until the fingerprint F1_0 corresponds to the initial fingerprint F0. As all the branches selected are gone through, , the matrix M1_0 is updated consequently on the flow with the static characteristics found in these branches. When there is an area in the matrix M1_0 that is filled with 0, it means that either the corresponding branch of the data or code area within the matrix M1_0 has not been selected during the test phase Ph0 and therefore is not explored during the set-up phase Ph1, either the corresponding branch has been altered, i.e., corrupted.

In a first non-limitative embodiment, the comparison is a local attestation A1 performed by the embedded characterization and measurement engine CME1. The embedded characterization and measurement engine CME1 performs the comparison. Such local attestation A1 during the set-up phase Ph1 is illustrated in figure 7 in the middle. To simplify the figure 7, the matrix M0 and the matrix M1_0 have been illustrated with white points for the 0 values and with gray points for the other values of their different locations.

It is to be noted that the initial fingerprint F0, is downloaded in the infrastructure I, either during the downloading of the CME1 or during its call or when it is run, either when the virtual function VF is instantiated.

In a second non-limitative embodiment, the comparison is a remote attestation A2 performed by a distant verifier V. In this case, in a non-limitative embodiment, the fingerprint F1_0 is transmitted by the embedded characterization and measurement engine CME1 to said distant verifier V (step E21' illustrated F21'(CME1, V, F1_0)) in figure 5. Said distant verifier V comprises a processor configured to perform said comparison. Said distant verifier V is configured to ask periodically for the fingerprint F1_0. The distant verifier V has access to the initial fingerprint F0 that is stored in one of its memory (not illustrated). In this second non-limitative embodiment, the distant verifier V is active as it will ask regularly for a fingerprint F1_0 to be sent to check the integrity of the virtual function VF.

If the fingerprint F1_0 is different from said initial fingerprint F0 at the end of the set-up phase Ph1 (branch A illustrated in figure 5, or F1_0≠F0 illustrated in figure 7), in step E23 illustrated F23(F1_0, F0, NOK, N1, E, RTR, Ac) in figure 5, a first notification N1 (illustrated in figure 7) is sent to an external entity E for future action Ac.

The notification N1 is sent via a notification agent (not illustrated) of the infrastructure I via a root of trust reporting RTR. The first notification N1 indicates that there is an anomaly in the virtual function VF.

The future action Ac is defined according to security policies set up by the service provider who administers the service that includes the virtual function VF. In a non-limitative embodiment, the future action Ac is the dropping of the launching and/or the desinstantiation of the virtual function VF.

In a non-limitative embodiment, the external entity E is the distant verifier V that will manage the errors.

The end of the set-up phase Ph1 is determined when during the execution of the set-up phase Ph1 either by said fingerprint's F1_0 value reaching said initial fingerprint's F0 value, or by the duration of the set-up phase Ph1 reaching the maximum duration time t1. Hence, when the fingerprint F1_0 is different from the initial fingerprint F0 at the end of the set-up phase Ph1, it means that the maximum duration time t1 has been reached. Hence, after this set-up phase Ph1, any difference of the fingerprint F1_0 with the fingerprint F0 is considered as an anomaly. In this case, it means that the virtual function VF has been modified and is different from the initial virtual function VF on which the initial embedded characterization and measurement engine CME0 has computed the initial fingerprint F0. One can deduce that it has been tampered.
The following anomalies can be detected : malicious access to the location of data of the virtual function VF from an address not known, jump to an address not known, malicious change in a static data.

When one of these conditions appears the corresponding value in the matrix M1_0 is changed to 0 and the fingerprint F1_0 is modified. In this case, the set-up phase Ph1 is not finished and the launching can't be done.

If the fingerprint's F1_0 value reaches the initial fingerprint's F0 value (branch B illustrated in figure 5, or , or F1_0=F0 illustrated in figure 7), it means that the virtual function VF has not been corrupted until now. It means that the set-up phase Ph1 has ended well. The next step is therefore executed.

In step E24 illustrated F24(VF, I, Ph2) in figure 5, the running phase Ph2 of the launching of the virtual function VF is executed.

In step E25 illustrated (CME1, F1_1, VF, Ph2) in figure 5, the embedded characterization and measurement engine CME1 that corresponds to the virtual function VF computes along the execution of said running phase Ph2 a fingerprint F1_1 of said virtual function VF. The same branches of the virtual function VF as the ones during the set-up phase Ph1 are explored for the computation of the fingerprint F1_1.

As described before, the computation of the fingerprint F1_1 comprises the sub-steps of:
- computing the corresponding characterization pattern CP1_1 in the form of a matrix M1_1 (sub-step E250 illustrated F250(CME1, CP1_1, M1_1)),
- computing a hash h of said matrix M1_1 (sub-step E251 illustrated E251(CME1, h, M1_1)).

It is to be noted that the matrix M1_1 corresponding to the characterization pattern CP1_1 is the matrix M1_0 found at the end of the set-up phase Ph1. Contrary to the set-up phase Ph1, the matrix M1_0 that is now referred as matrix M1_1, doesn't change during the running phase Ph2 as during this phase, the static characteristics don't change. Hence, the matrix M1_1 that is continuously computed when going through all the selected branches of the virtual function VF should not change during the running phase Ph2. If it changes, that is to say one of its values change in one of its locations, it means that the virtual function VF has been altered, i.e., corrupted.
It is to be noted that the same cryptographic function, here the hash, that was used to generate the initial fingerprint F0 is used.

The characterization pattern CP1_1 is called here a characterization running pattern CP1_1 as it is computed during the running phase Ph2.

Either the embedded characterization and measurement engine CME1 is within said infrastructure I, either the infrastructure I contains a reference Ref to said embedded characterization and measurement engine CME1, this latter being within a distant server in a non-limitative example. In this later case, there will be a call to said embedded characterization and measurement engine CME1 if it is a software or a run of said embedded characterization and measurement engine CME1 if it is a hardware.

As mentioned before, the fingerprint F1_1 is based on static characteristics C1, said static characteristics C1 being extracted from the whole or parts P1 of the virtual function VF. The advantage of going over only to some parts P1 of the virtual function VF is to reduce the duration of the running phase Ph2 also.

In step E26 illustrated (F1_1, F0, Ph2) in figure 6, during the running phase Ph2, the fingerprint F1 is compared with the initial fingerprint F0.
In a first non-limitative embodiment, the comparison is a local attestation A1 performed by the embedded characterization and measurement engine CME1. Thus, the embedded characterization and measurement engine CME1 performs the comparison.
In a second non-limitative embodiment, the comparison is a remote attestation A2 performed by said distant verifier V. Such remote attestation A2 during the running phase Ph2 is illustrated in figure 7 on the right. To simplify the figure 7, the matrix M0 and the matrix M1_1 have been illustrated with white points for the 0 values and with gray points for the other values of their different locations. In this case, in a non-limitative embodiment, the fingerprint F1_1 is transmitted by the embedded characterization and measurement engine CME1 to said distant verifier V (step E25' illustrated F25'(CME1, V, F1_1) in figure 5.

If the fingerprint F1_1 is different from said initial fingerprint F0 during the running phase Ph2 (branch D illustrated in figure 6, or F1_1≠F0 illustrated in figure 7), it means that there is a problem, and therefore in step E27 illustrated F27(F1_1, F0, NOK, N2, E, RTR, Ac) in figure 6, a second notification N2 (illustrated in figure 7) is sent to said external entity E for future action Ac.
The second notification N2 is sent via a notification agent (not illustrated) of the infrastructure I via a root of trust reporting RTR. The second notification N2 indicates that there is an anomaly within the virtual function VF. The second notification N2 is the same as the first notification N1 or can be different.
The future action Ac is defined according to security policies set up by the service provider who administers the service that includes the virtual function VF. In a non-limitative embodiment, the future action Ac is the dropping of the launching or a desintantiation of the virtual function VF. In another non-limitative embodiment, the future action Ac is to put the virtual function VF in quarantine and to replace it with an identical virtual function VF in order not to interrupt the service implemented or based on the virtual function VF that has been corrupted. It is to be noted that the future action Ac is this running phase Ph2 can be the same as in the set-up phase Ph1 or different.
Hence, during this running phase Ph2, any difference of the fingerprint F1 with the fingerprint F0 is considered as an anomaly. In this case, it means that the virtual function VF has been modified and is different from the initial virtual function VF on which the test characterization and measurement engine CME0 has computed the initial fingerprint F0. One can deduce that it has been tampered.
The following anomalies can be detected : malicious access to the location of data of the virtual function VF from an address not known, jump to an address not known, malicious change in a static data. When one of these conditions appears the corresponding value in the matrix M1_1 is changed to 0 and the fingerprint F1_1 is modified. In this case, the running phase Ph2 is not finished and the launching can't be resumed.

If the fingerprint's F1_1 value is equal to the initial fingerprint's F0 value (branch E illustrated in figure 6, or, or F1_1=F0 illustrated in figure 7), it means that the virtual function VF has not been corrupted until now. It means that the running phase Ph2 ends well and has not been interrupted. The launching is therefore resumed in step E28 illustrated F28(F1_1, F0_0, OK, Ph2). Hence, the virtual function VF is executed within the infrastructure I with success.

It is to be noted that the computer-implemented launching method 2 can be performed by a computer program product. Said computer program product comprises a set of instructions, which when loaded into said computer, causes the computer to carry out the computer-implemented launching method 2. Hence, the computer program product is embodied on the non-transitory computer readable storage medium having a set of instructions stored therein.
The computer program product is also referred to as a program, software, software application, or code. A computer program product can be deployed in any form, including, but not limited to, as a stand-alone program, or as a module, component, subroutine, or other unit suitable for use in a computing environment.
In non-limitative embodiments, the instructions also called program instructions, may be assembler instructions, instruction-set-architecture (ISA) instructions, machine instructions, microcode, firmware instructions, configuration data for integrated circuitry, or either source code, or object code written in any combination of one or more programming languages, including compiled of interpreted languages, such as procedural programming language or object-oriented programming language.
In non-limitative embodiments, the non-transitory computer readable storage medium is an electronic storage device, a magnetic storage device, an optical storage device, an electromagnetic storage device, a semiconductor storage device, or any suitable combination of the foregoing. In non-limitative examples, the computer readable storage medium is a read-only memory ROM or the like such as PROM, an erasable programmable read-only memory EPROM or the like such as EEPROM, a Flash memory, a solid-state memory, a DVD, and the like.

It is to be noted that the computer-implemented downloading method 1 can also be performed by a computer program product.

It is to be understood that the present invention is not limited to the aforementioned embodiments and variations and modifications may be made without departing from the scope of the invention. All statements herein reciting principles, aspects, and embodiments of the invention, as well as specific examples thereof, are intended to encompass equivalents thereof. In this respect, the following remarks are made. In another non-limitative embodiment, a cryptographic function other than the hash h can be used to compute the fingerprint F1 and the initial fingerprint F0. In a non-limitative embodiment, an integrity check during the boot-time of the virtual function VF can also be performed, that is to say during the instantiation and hence before the execution of said virtual function VF when it is not yet in operation.

Hence, some embodiments of the invention may comprise one or a plurality of the following advantages:
- it proposes a simple solution for a set-up phase attestation and a running phase attestation, which is a security challenge for the cybersecurity of infrastructures such as cloud infrastructures,
- it permits the detection of modification and tampering during both the set-up phase Ph1 and the running phase Ph2 and prevent resuming the launching of a virtual function VF that has been tampered,
- it permits real-time reactivity in a virtualization environment when a malware tampered a virtual function VF as it can replace the tampered virtual function VF by another identical virtual function VF to avoid an interruption of a service,
- it provides high security level for infrastructures,
- contrary to the prior art, it gives a security solution to check a virtual function VF when it is placed in its execution environment and when it operates.

## Claims

1. Embedded characterization and measurement engine (CME1) for a virtual function (VF) within an infrastructure (I), wherein said embedded characterization and measurement engine (CME1) is configured to:
- when the virtual function (VF) is instantiated within said infrastructure (I) and is running within said infrastructure (I), compute a fingerprint (F1) based on static characteristics (C1), said static characteristics (C1) being extracted from the whole or parts (P1) of the virtual function (VF),
- perform a local attestation (A1) by comparing said fingerprint (F1) with an initial fingerprint (F0) or transmit said fingerprint (F1) to a distant verifier (V) for a remote attestation (A2),
- if the fingerprint (F1) is different from said initial fingerprint (F0), sending a notification (N1, N2) to an external entity (E) for future action (Ac).

2. Embedded characterization and measurement engine (CME1) according to claim 1, wherein said parts (P1) of the virtual function (VF) are loops of the virtual function (VF) that are often executed and/or parts that are impacting the security of the virtual function (VF) if tampered.

3. Embedded characterization and measurement engine (CME1) according to claim 1 or claim 2, wherein said static characteristics (C1) comprise static data, and/or static source addresses, and/or static jump addresses, and/or recurrent calling graphs.

4. Embedded characterization and measurement engine (CME1) according to any of the preceding claims 1 to 3, the computation of the fingerprint (F1) comprises :
- the computation of a characterization pattern (CP1) that is a mapping of a value of each of these static characteristics (C1) with corresponding data area (a) or code area (a) for static data, and/or static source addresses, and/or static jump addresses, or a digital representation of the graph for the recurrent calling graphs,
- the computation of a hash (h) of said characterization pattern (CP1).

5. Computer-implemented downloading method (1) for downloading a virtual function (VF) within an infrastructure (I), wherein said computer-implemented downloading method (1) comprising:
- downloading a computer program product (Pg1) relative to said virtual function (VF) with an initial fingerprint (F0) of said virtual function (VF), and with an embedded characterization and measurement engine (CME1) according to any of the preceding claims 1 to 4, or a reference (Ref) to an embedded characterization and measurement engine (CME1) according to any of the preceding claims 1 to 4.

6. Computer-implemented downloading method (1) according to the preceding claim, wherein said computer-implemented downloading method (1) further comprising :
- configuring said embedded characterization and measurement engine (CME1) by setting-up parameters (Pa) related to said virtual function (VF), said parameters (Pa) comprising an indication on whether the static characteristics (C1) are to be extracted from the whole or parts (P1) of the virtual function (VF), and which parts (P1) are concerned.

7. Computer-implemented downloading method (1) according to the preceding claim, wherein said parameters (Pa) further comprise an indication of a maximum duration time (t1) for a set-up phase (Ph1) when launching said virtual function (VF).

8. Characterization and measurement engine (CME0) for a virtual function (VF), wherein said characterization and measurement engine (CME0) is configured to :
- detect static characteristics (C0) within said virtual function (VF) when said virtual function (VF) is running,
- compute an initial fingerprint (F0) based on said static characteristics (C0), said static characteristics (C0) being extracted from the whole or parts (P1) of the virtual function (VF),
- store said initial fingerprint (F0).

9. Characterization and measurement engine (CME0) according to the preceding claim, wherein said parts (P1) are loops of the virtual function (VF) that are often executed and/or parts that are impacting the security of the virtual function (VF) if tampered.

10. Characterization and measurement engine (CME0) according to claim 8 or claim 9, wherein said static characteristics (C0) comprise static data, and/or static source addresses, and/or static and jump addresses, and/or recurrent calling graphs.

11. Characterization and measurement engine (CME0) according to any of the preceding claims 8 to 10, wherein the computation of the initial fingerprint (F0) comprises:
- the computation of an initial characterization pattern (CP0) that is a mapping of a value of each of these static characteristics (C0) with corresponding data area (a) or code area (a) for static data, and/or static source addresses, and/or static jump addresses, or a digital representation of the graph for the recurrent calling graphs,
- the computation of a hash (h) of said initial characterization pattern (CP0).

12. Computer-implemented launching method (2) for launching a virtual function (VF) within an infrastructure (I), the launching comprising a set-up phase (Ph1) and a running phase (Ph2) executed after said set-up phase (Ph1), said computer-implemented launching method (2) comprising :
- launching said virtual function (VF) within said infrastructure (I) by first executing said set-up phase (Ph1),
- computing along the execution of said set-up phase (Ph1) by an embedded characterization and measurement engine (CME1) corresponding to said virtual function (VF) a fingerprint (F1) of said virtual function (VF),
- comparing during the set-up phase (Ph1) said fingerprint (F1) with an initial fingerprint (F0),
- if the fingerprint (F1) is different from said initial fingerprint (F0) at the end of the set-up phase (Ph1), sending a first notification (N1) to an external entity (E) for future action (Ac),
- otherwise:
- executing the running phase (Ph2),
- computing along the execution of said running phase (Ph2) by said embedded characterization and measurement engine (CME1) of a fingerprint (F1) of said virtual function (VF),
- comparing during said running phase (Ph2) said fingerprint (F1) with said initial fingerprint (F0),
- if the fingerprint (F1) is different from said initial fingerprint (F0) during the running phase (Ph2), sending a second notification (N2) to said external entity (E) for future action (Ac),
- otherwise, resuming the execution of the launching.

13. Computer-implemented launching method (2) according to claim 12, wherein the comparison of said fingerprint (F1) is a local attestation (A1) performed by said embedded characterization and measurement engine (CME1).

14. Computer-implemented launching method (2) according to claim 12, wherein the comparison of said fingerprint (F1) is a remote attestation (A2) performed by a distant verifier (V).

15. Computer-implemented launching method (2) according to any of the preceding claims 12 to 14, the end of the set-up phase (Ph1) is determined when during the execution of the set-up phase (Ph1) either by said fingerprint's (F1) value reaching said initial fingerprint's (F0) value, either by the duration of the set-up phase (Ph1) reaching a maximum duration time (t1).

16. Computer-implemented launching method (2) according to any preceding claims 12 to 15, wherein said fingerprint (F1) is based on static characteristics (C1), said static characteristics (C1) being extracted from the whole or parts (P1) of the virtual function (VF).
